Europäisches Patentamt

European Patent Office

Office européen des brevets

(19)

(11) Numéro de publication : **0 388 331 B1**

(12) **FASCICULE DE BREVET EUROPEEN**

(45) Date de publication du fascicule du brevet :
08.07.92 Bulletin 92/28

(51) Int. Cl.⁵ : **A22C 21/00, A22C 17/02**

(21) Numéro de dépôt : **90420134.0**

(22) Date de dépôt : **12.03.90**

(54) **Procédé et dispositif de découpe de volailles.**

(30) Priorité : **13.03.89 FR 8903709**

(43) Date de publication de la demande :
**19.09.90 Bulletin 90/38**

(45) Mention de la délivrance du brevet :
**08.07.92 Bulletin 92/28**

(84) Etats contractants désignés :
**AT BE CH DE DK ES GB GR IT LI LU NL SE**

(56) Documents cités :
**EP-A- 0 168 865**
**EP-A- 0 203 015**
**US-A- 4 019 223**
**US-A- 4 373 232**
**US-A- 4 385 421**
**US-A- 4 477 942**
**US-A- 4 589 165**
**US-A- 4 780 930**

(73) Titulaire : **ETABLISSEMENTS ARRIVE S.A.**
**(Société Anonyme de droit français)**
**F-85250 Saint Fulgent (FR)**

Titulaire : **UNION FINANCIERE POUR LE**
**DEVELOPPEMENT DE L'ECONOMIE**
**CEREALIERE-UNIGRAINS (Société Anonyme**
**de droit français)**
**8, avenue du Président Wilson**
**F-75016 Paris (FR)**

(72) Inventeur : **Villemin, Daniel**
**19 rue Condorcet**
**F-94439 Chennevieres S/Marne (FR)**
Inventeur : **Plusa, Janusz**
**1, Parc de la Chênaie**
**F-94379 Sucy Brie (FR)**
Inventeur : **Guilbaud, Daniel**
**17 avenue de Bretagne**
**F-85250 Saint Fulgent (FR)**
Inventeur : **Leclere, Jean**
**3 Allée Marcel Pagnol**
**F-94000 Cretell (FR)**
Inventeur : **Romand, Paul**
**La Bâtie, Besayes**
**F-26300 Bourg de Péage (FR)**

(74) Mandataire : **Maureau, Philippe et al**
**Cabinet GERMAIN & MAUREAU BP 3011**
**F-69392 Lyon Cédex 03 (FR)**

EP 0 388 331 B1

## Description

La présente invention a pour objet un procédé et un dispositif de découpe de volailles, le terme découpe étant utilisé pour désigner le désassemblage de la chair et des membres d'un animal par rapport au squelette osseux de celui-ci.

Les volailles de grosse taille, et notamment les dindes, qui sont rarement vendues entières, sont découpées après abattage en un certain nombre de morceaux.

Les morceaux issus de cette découpe sont présentés et vendus séparément ou regroupés, la valorisation de chacun d'entre eux pouvant être très différente.

Dans le cas d'une dinde, par exemple, après que les abats aient été retirés par un orifice naturel et par une incision ménagée dans la partie postérieure de l'animal, celui-ci est ressué, puis il est suspendu à une chaîne dont le déplacement assure l'amenée de la carcasse a un certain nombre de postes où les différents morceaux sont détachés et désossés manuellement par des opérateurs. Ce traitement nécessite une main-d'oeuvre importante tout en présentant l'inconvénient que la qualité de la découpe dépend de l'habileté de l'opérateur, et qu'une quantité non négligeable de viande reste accrochée à la carcasse en fin de traitement, ce qui constitue une perte pour le conditionneur. Il faut en effet considérer que le squelette osseux d'une volaille ne possède pas une surface extérieure parfaitement convexe, mais comporte également, compte tenu de la morphologie de l'animal, des parties en creux hors desquelles il n'est pas aisé de retirer la viande qui y est logée.

La morphologie générale d'une volaille peut être définie de la façon suivante :

L'extrémité avant du thorax se ferme sur une architecture osseuse déterminée par la colonne vertébrale à la base du cou de l'animal, les clavicules et les coracoïdes.

La partie centrale de la carcasse est délimitée par la colonne vertébrale, les côtes et le sternum.

La partie postérieure du bassin de forme plus ou moins concave et se terminant par le pygostyle et l'ischium comporte les zones d'articulation des fémurs ainsi que les orifices iliaques.

La complexité de cette structure explique les difficultés qu'il y a à séparer parfaitement la viande de la structure osseuse.

Compte tenu de cette complexité, les machines de découpe de volailles actuellement sur le marché séparent indépendamment les ailes, les cuisses et les filets. Certains des morceaux nobles ne sont pas découpés de façon rigoureuse ; par exemple une partie de la chair constitutive d'un filet peut demeurer sur la cuisse correspondante, ce qui ne permet pas de valoriser chacun des morceaux en fonction de sa valeur intrinsèque. Il en résulte un rendement matière très moyen tant d'un point de vue quantitatif que qualitatif.

D'autre part, certains procédés ou machines connus, manuels ou automatiques, qui d'ailleurs, pour les secondes, sont limitées à la découpe du poulet :

– soit ne permettent pas de parfaitement découper les volailles car leur contention est assurée par l'intérieur à l'aide d'une tige traversant la carcasse de part en part, ce qui constitue une gêne pour la découpe puisqu'empêchant notamment la coupe des coracoïdes et du pygostyle ;

– soit nécessitent la découpe automatique des filets sur une machine indépendante ;

– soit, dans le cas des machines, ne sont pas adaptées à une grande variabilité de la taille des volailles.

La présente invention vise à remédier à ces inconvénients en fournissant un procédé et un dispositif de découpe permettant, par un enchainement d'un certain nombre de phases, d'automatiser la découpe tout en séparant le maximum de viande du squelette.

A cet effet, le procédé qu'elle concerne consiste à réaliser :

– la découpe des filets, afin de les séparer de la carcasse,

– le décollement des ailes et/ou des coracoïdes,

– la luxation des cuisses,

– et l'arrachement vis-à-vis de la carcasse d'un paletot constitué par les cuisses, les filets et les ailes.

Certaines des phases de ce procédé peuvent être interverties.

Ce procédé permet d'obtenir, d'une part un paletot ou deux demi-paletots regroupant la totalité de la viande qui est ensuite traitée pour être conditionnée sous différentes formes, telles que cuisses, filets, rôtis, escalopes, etc, tout en permettant au conditionneur de choisir la ligne de coupe entre deux morceaux pour l'adapter le mieux possible au travail à effectuer, et d'autre part, la carcasse nue séparée de tout morceau noble.

Selon un mode de mise en oeuvre, ce procédé consiste à réaliser :

– la découpe à partir du sternum des deux filets sur une partie de la hauteur de ceux-ci, afin de les séparer de la carcasse,

– la coupe des coracoïdes,

– l'arrachement des coracoïdes ainsi que le décollement des ailes et des parties de filets déjà découpées,

– la fin de découpe des filets pour les séparer de la carcasse,

– la luxation des deux cuisses,

– l'arrachement vis-à-vis de la carcasse d'un paletot constitué par les cuisses, les filets et les ailes,

– et l'arrachement du pygostyle.

Ce procédé permet de ne laisser qu'un minimum de viande sur la carcasse, l'ordre des différentes opérations, et notamment la découpe des filets en deux temps, avec d'une part coupe intermédiaire des coracoïdes et d'autre part arrachement intermédiaire de la partie avant du paletot, assurant un passage des outils le plus près possible de la carcasse.

Avantageusement, ce procédé consiste tout d'abord à réaliser la fixation de la carcasse par l'intérieur de celle-ci sur un dispositif de contention, sur lequel la carcasse demeure dans une position de référence déterminée pendant tout le processus de découpe.

Dans ce cas, la tête et le cou de l'animal ne servant pas, comme tel peut être le cas, à suspendre l'animal à une chaîne de manutention, il est procédé à la coupe du cou et des tendons à la base de celui-ci, immédiatement après fixation de la carcasse sur le dispositif de contention.

Selon ce mode de mise en oeuvre, ce procédé consiste à réaliser, avant la première découpe de filets, une double incision de la peau le long du sternum de part et d'autre de celui-ci. Ceci permet de faciliter le début des opérations de séparation de la viande et de la partie osseuse de la carcasse. Dans la mesure où l'on souhaite obtenir deux demi-paletots, il est procédé également à une incision de la peau le long de la colonne vertébrale.

Ce procédé consiste également à réaliser, après la coupe des coracoïdes, une fente verticale de chaque côté de l'ischium puis, une seconde opération de fente horizontale depuis l'arrière amorçant le décollement de la chair des cuisses. Enfin, après séparation du paletot et arrachement du pygostyle, la carcasse est éjectée automatiquement du dispositif de contention sur lequel elle est fixée.

Un dispositif pour la mise en oeuvre de ce procédé comprend d'une part une colonne verticale, sur laquelle est montée pivotante une table, l'entraînement en rotation de cette dernière étant réalisé par l'intermédiaire d'un moteur auquel est associé un mécanisme d'indexage assurant un pivotement par pas de la table selon un angle de valeur déterminée, la table étant équipée de bras radiaux avec formation entre deux bras voisins d'un angle égal à l'angle correspondant au pas du pivotement de la table, chaque bras étant équipé, à son extrémité libre d'un dispositif de contention par l'intérieur, d'une carcasse de volaille, et d'autre part un certain nombre de postes de travail destinés chacun à la mise en oeuvre d'une phase de l'opération de découpe, disposés selon un cercle de même axe que celui de la colonne verticale, à proximité des extrémités des bras supports de volailles, et montés sensiblement selon la même répartition angulaire que lesdits bras, des moyens étant prévus pour commander la mise en service de chaque poste après positionnement en face de lui d'une carcasse de volaille.

Il est ainsi possible de réaliser simultanément la découpe de plusieurs volailles, chacune se trouvant à un stade de découpe plus ou moins avancé, selon le rang du poste au niveau duquel elle se trouve. Une telle solution permet donc de bénéficier de débits très élevés.

Conformément à une possibilité, les incisions de la peau le long du sternum et de la colonne vertébrale sont réalisées à un poste comprenant un chariot déplaçable radialement par rapport à la table, portant une colonne à l'extrémité supérieure de laquelle sont montés, superposés et articulés autour d'axes horizontaux et perpendiculaires à la direction de déplacement du chariot, deux bras reliés l'un à l'autre par l'intermédiaire d'un vérin les actionnant dans un sens de rapprochement ou d'écartement à la façon d'un compas, chaque bras étant équipé, à son extrémité libre, d'une scie circulaire, simple ou double, les moyens de commande étant tels que, partant d'une position dans laquelle le chariot est reculé, il est procédé successivement à la détection de présence d'une volaille sur son support, à l'avance du chariot, à la mise en contact avec la volaille d'une butée montée sur la colonne, à la mise en rotation des scies, à la fermeture des bras pour amener les scies en contact de la peau, au déplacement en sens inverse du chariot avec incision de la peau, à l'arrêt de la rotation des scies, à l'ouverture des bras.

Suivant une autre caractéristique de l'invention, les moyens de coupe des coracoïdes sont constitués par un poste de travail comprenant un chariot déplaçable radialement par rapport à la table, dont l'extrémité située du côté de celle-ci est équipée d'une scie circulaire montée sur un axe perpendiculaire à l'axe de déplacement du chariot, une butée limitant le déplacement du chariot vers la volaille, et un support qui, destiné à venir prendre appui contre le dos de la carcasse tourné vers le bas, est déplaçable selon une direction sensiblement verticale, les moyens de commande étant tels qu'il est procédé successivement à la détection de présence d'une volaille, à l'amenée du support dorsal au contact de celle-ci, à l'avance du chariot avec mise en fonctionnement de la scie, à la découpe des coracoïdes jusqu'à mise en appui de la butée contre la volaille, qui commande le retour du chariot, l'arrêt de la scie, et le retour en position basse du support dorsal.

Les moyens de réalisation, de chaque côté de l'ischium, d'une fente amorçant le décollement de la chair de la cuisse sont constitués par un poste de travail comprenant d'une part une butée supérieure prenant appui sur la face ventrale et du côté des cuisses de la volaille, et d'autre part un dispositif mobile verticalement, disposé en-dessous du plan de déplacement des volailles par les bras, équipé de deux couteaux sensiblement parallèles et d'orientation verticale destinés à pratiquer deux fentes verticales dans la volaille, de part et d'autre de l'ischium.

Afin de suivre au mieux le profil de la carcasse, les couteaux sont auto-orientables, c'est-à-dire montés pivotants verticalement au contact de guides profilés.

Suivant une caractéristique de l'invention, les moyens de réalisation de chaque côté de l'ischium d'une fente complètant le décollement de la chair de chaque cuisse sont constitués par deux lames montées sur un support déplaçable radialement par rapport à la table pivotante, disposées de façon symétrique par rapport au plan médian longitudinal du support, profilées longitudinalement depuis leur extrémité avant tournée du côté de la table, vers leur extrémité arrière, et incurvées latéralement pour former deux demi-coquilles.

Suivant une autre caractéristique de l'invention, les moyens de luxation des deux cuisses sont constitués par un poste de travail comprenant une colonne à l'extrémité supérieure de laquelle est montée, pivotante autour d'un axe horizontal et perpendiculaire à l'axe d'un bras support de volaille immobilisé en regard de ce poste, et actionnable à l'aide d'un vérin, une fourche dont les deux branches parallèles sont susceptibles de venir prendre appui en partie haute des deux cuisses, et un support dorsal déplaçable de bas en haut par un vérin, les moyens de commande étant tels qu'il est procédé successivement à la détection de la présence d'une volaille, à la mise en appui du support dorsal contre la volaille, au basculement de la fourche vers le bas puis vers le haut et au retour en position basse du support dorsal.

Après luxation des cuisses, il est procédé à l'arrachement du paletot à l'aide de moyens constitués par un poste de travail, comprenant un support sur lequel sont montées sur un chariot déplaçable horizontalement et radialement, deux pinces disposées en-dessous du plan des bras supports de volailles et dont les ouvertures sont tournées vers l'extérieur et sont susceptibles d'enserrer chacune une cuisse, les moyens de commande étant tels qu'il est procédé successivement à la détection de présence d'une volaille au poste, au déplacement des pinces en direction des cuisses, au serrage des pinces sur les cuisses, à la poursuite de l'avance du chariot avec arrachement des cuisses, de l'ensemble du paletot ou des deux demi-paletots, à l'ouverture des pinces puis au retour du chariot en position de départ.

Avantageusement ce poste comprend d'une part une butée venant prendre appui contre le pygostyle, destinée à assurer un blocage axial de la carcasse lors de l'arrachement du paletot, et d'autre part une butée venant prendre appui contre la section de la colonne vertébrale à l'endroit où le cou a été coupé.

Les moyens de séparation du pygostyle sont constitués par un poste comprenant un bâti sur lequel sont articulées, autour d'axes horizontaux et transversaux à l'axe du bras support de volaille immobilisé à ce poste, deux tiges parallèles de longueur correspondant à la distance entre les axes et le pygostyle d'une volaille située à ce poste, dont les extrémités libres sont reliées par une bielle portant une lame comportant une ouverture en V, une tige étant actionnable en rotation par action d'un vérin, les moyens de commande étant tels qu'après détection de la présence d'une volaille, les tiges étant inclinées vers l'intérieur, il est procédé au basculement de celles-ci vers l'extérieur, mouvement au cours duquel la lame en V s'engage sur le pygostyle et sépare celui-ci de la carcasse, avant retour des tiges en position de départ.

De toute façon, l'invention sera bien comprise à l'aide de la description qui suit, en référence au dessin schématique annexé représentant, à titre d'exemple non limitatif, une forme d'exécution de ce dispositif :

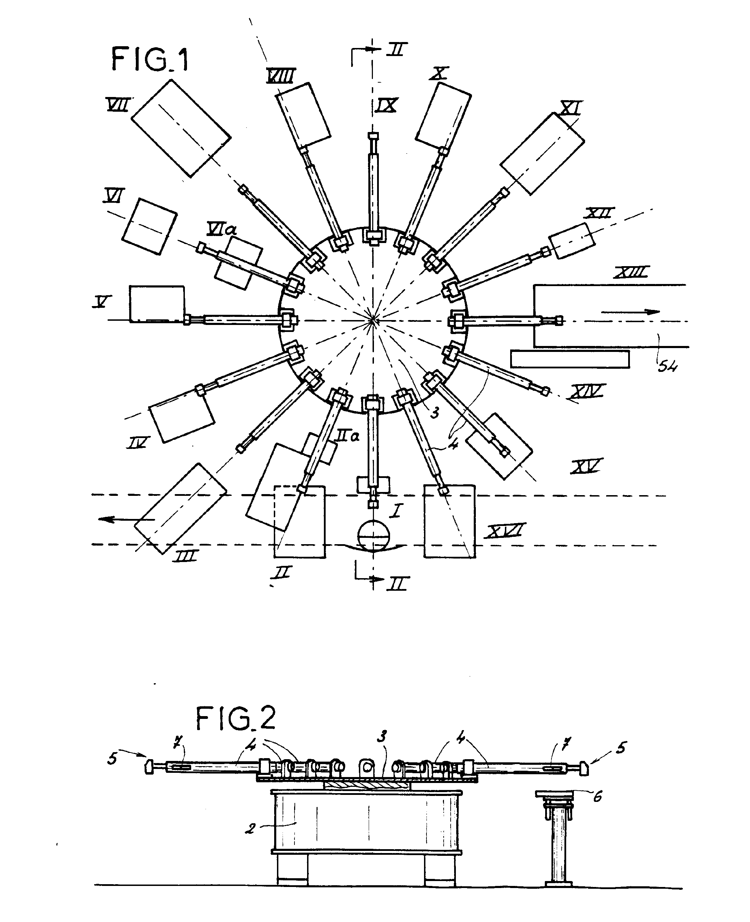

Figure 1 en est une vue très schématique de dessus ;

Figure 2 en est une vue en coupe transversale selon la ligne II-II de figure 1 ;

Figure 3 est une vue de côté du poste de coupe de la peau ;

Figure 4 est une vue de côté du poste de coupe des coracoïdes ;

Figure 5 et 6 sont deux vues de côté et de dessus du poste réalisant une fente arrière verticale amorçant le décollement de la chair d'une cuisse ;

Figures 7 et 8 sont deux vues respectivement de côté et en coupe transversale d'un poste réalisant une coupe arrière horizontale complétant le décollement de la chair des cuisses ;

Figures 9 et 10 sont deux vues respectivement de côté et de dessus du poste de luxation des cuisses ;

Figures 11 et 12 sont deux vues respectivement de dessus et de côté du poste d'arrachement du paletot ;

Figure 13 est une vue de côté du poste de coupe du pygostyle ;

Figure 14 est une vue en plan de la lame de coupe du pygostyle.

Le dispositif représenté au dessin comprend une colonne centrale verticale 2 sur laquelle est montée pivotante une table 3. L'entraînement en rotation de cette table sur la colonne est réalisé par l'intermédiaire d'un moteur auquel est associé un mécanisme d'indexage assurant un pivotement par pas de la table, selon un angle de valeur déterminée. Cette table est équipée de seize bras radiaux 4, deux bras adjacents formant un angle égal à l'angle correspondant au pas du pivotement de la table. Chaque bras est équipé à son extrémité libre, d'un dispositif de contention immobilisant la volaille par l'intérieur de la carcasse dans une position de référence déterminée. Ce dispositif peut être conforme par exemple au dispositif faisant l'objet du brevet français 85 08275 au nom de la Demanderesse.

A la périphérie de la table 3 sont disposés dans les zones d'extrémité des bras 4 équipés des dispositifs de contention 5, des postes de travail, au nombre de seize dans la forme d'exécution représentée au dessin, numérotés de I à XVI, deux postes voisins étant décalés angulairement l'un de l'autre d'une valeur sensiblement égale au pas d'avance du plateau lors de sa rotation.

Le poste I est le poste de chargement d'une carcasse de volaille, telle qu'une dinde, sur un dispositif de contention, ce chargement intervenant, l'animal ayant le dos tourné vers le bas, après mise en appui de son dos sur un support 6. La fixation est réalisée notamment par écartement de biellettes 7 que comporte le dispositif de contention, qui s'engagent dans les fosses iliaques de la volaille, un piston déplaçable axialement venant prendre appui à l'avant de la cage thoracique.

Le poste II auquel la carcasse est amenée après rotation de la table de la valeur d'un premier pas est destiné à réaliser la coupe du cou de l'animal, et la coupe des tendons disposés à la base du cou. Ce poste comprend par exemple le dispositif décrit dans le brevet français 89 00570 au nom de la Demanderesse.

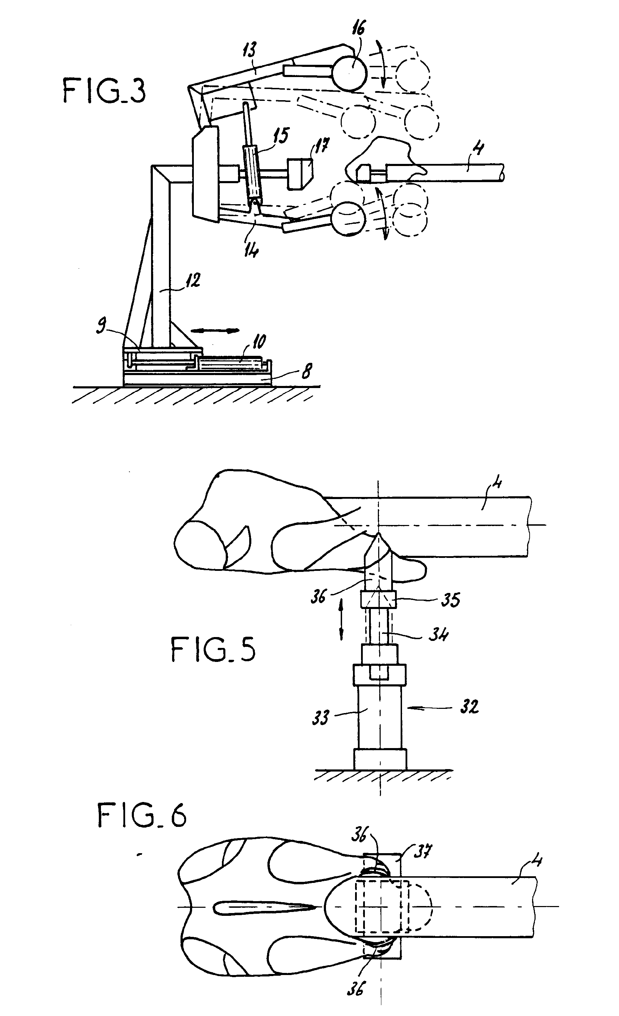

Le poste III vise à réaliser la coupe de la peau de l'animal au niveau de la colonne vertébrale et au niveau du sternum. Ce poste comprend, comme montré à la figure 3, un bâti 8, fixé au sol, sur lequel est monté déplaçable radialement par rapport à la table un chariot 9 actionné par un vérin 10. Ce chariot 9 porte une colonne 12 dont l'extrémité supérieure est en forme de col de cygne. A cette extrémité supérieure sont articulés deux bras superposés 13 et 14, l'articulation de ces bras étant réalisée autour d'axes horizontaux et perpendiculaires à la direction de déplacement du chariot. Ces deux bras 13 et 14 sont reliés l'un à l'autre par un vérin et sa tige 15, qui permettent de les rapprocher ou de les écarter à la façon d'un compas. Chaque bras est équipé à son extrémité libre d'une scie circulaire 16 montée sur un axe parallèle à l'axe d'articulation du bras, le bras supérieur étant équipé d'une scie double, tandis que le bras inférieur est équipé d'une scie simple. Enfin l'extrémité avant de la colonne 12 est équipée d'une butée 17 destinée à venir prendre appui contre la carcasse de la volaille.

La cinématique de ce poste est la suivante : Partant d'une position reculée représentée en traits pleins à la figure 3, il est procédé à la détection de présence d'une volaille à ce poste, à l'avance du chariot en direction de la volaille, jusqu'à ce que la butée 17 prenne appui sur celle-ci, à la mise en rotation des scies 16, et à la fermeture des bras 13,14 pour amener les scies au contact de la peau. Le chariot 9 est alors déplacé en sens inverse, mouvement au cours duquel est réalisée la coupe de la peau, puisque les scies 16 sont au contact de celle-ci. Les deux bras 13 et 14 s'écartent et se rapprochent en tenant compte du profil de la volaille et en assurant un contact entre cette dernière et les scies, une butée étant prévue sur chaque bras pour limiter la profondeur de pénétration des scies dans la peau à une valeur prédéterminée et réglable. Lorsque le chariot est revenu en position arrière, il est procédé à l'arrêt de la rotation des scies, puis à l'ouverture des bras.

Les postes IV et V permettent de réaliser la coupe d'une partie des filets à partir du sternum. Cette coupe est avantageusement exécutée à l'aide d'un système mettant en oeuvre un fil de coupe, tel que celui décrit dans le brevet français 85 08276 au nom de la Demanderesse, et un dispositif de guidage du fil, tel que décrit dans le brevet français 89 00571 au nom de la Demanderesse.

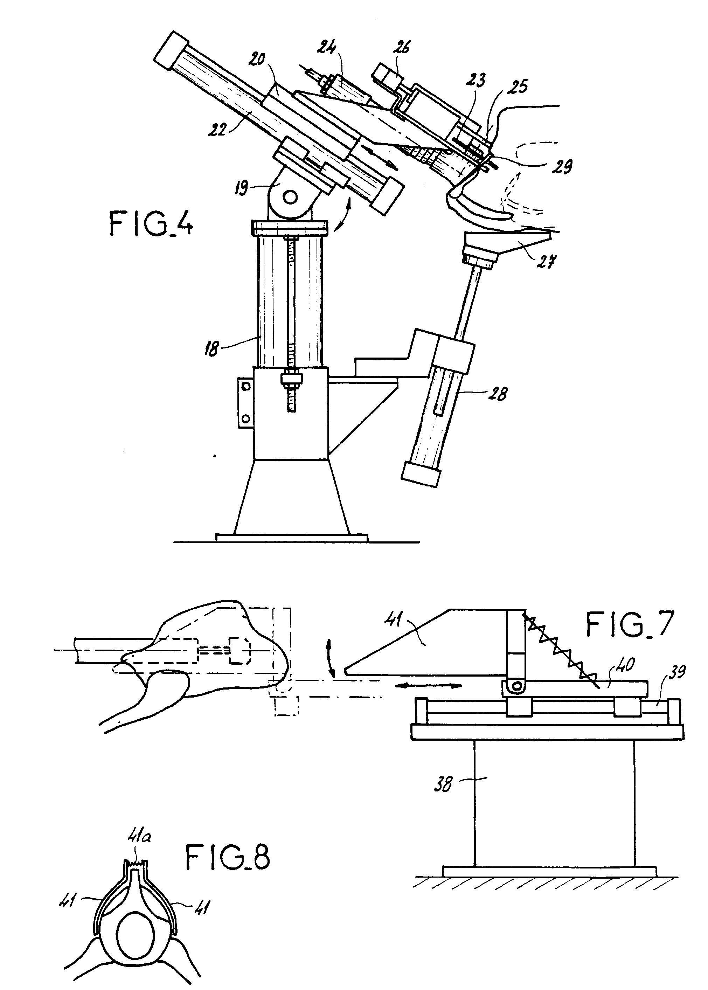

Le poste VI représenté à la figure 4 permet de réaliser la coupe des coracoïdes. Ce poste comprend un bâti 18 fixé au sol, à la partie supérieure duquel est fixé, avec possibilité de réglage angulaire, un support 19. Sur ce support 19 est monté un chariot 20 déplaçable par un vérin 22, dans une direction radiale à la table. L'extrémité avant du chariot 20 est équipée d'une scie circulaire 23 entraînée en rotation par un moteur 24, autour d'un axe perpendiculaire à l'axe de déplacement du chariot. Le chariot est également équipé d'un doigt 25 associé à un détecteur 26 commandant l'arrêt de l'avance du chariot lorsque le doigt arrive au contact de la volaille. Ce poste comprend aussi un support 27, déplaçable sensiblement verticalement par un vérin 28, destiné à venir prendre appui sous le dos de la volaille.

Le fonctionnement de ce poste est le suivant : Le chariot 20 étant en position reculée, il est procédé à la détection de présence d'une volaille. Le support dorsal 27 est alors amené au contact de la volaille, puis il est procédé à l'avance du chariot 20 avec mise en fonctionnement de la scie 23. Au cours de ce mouvement d'avance, il est procédé à la coupe des coracoïdes 29, le mouvement d'avance étant stoppé par appui du doigt 25 contre la volaille, qui provoque le déplacement en sens inverse du chariot, l'arrêt de la scie et le retour en position basse du support dorsal.

La position de la scie est réglable le long de son axe de rotation afin de permettre la coupe des coracoïdes au niveau souhaité par l'utilisateur.

Le poste VI a, représenté en vue de côté à la figure 5 et en vue de dessus à la figure 6, permet de réaliser de chaque côté de l'ischium une fente amorçant le décollement de la chair de la cuisse correspondante.

Ce poste comprend un dispositif 32 mobile verticalement disposé en-dessous du plan de déplacement des volailles par les bras 4. Ce dispositif comprend un vérin 33 d'axe vertical dont la tige 34 est équipée d'un support 35 pour deux couteaux 36 sensiblement parallèles et d'orientation verticale susceptible d'une auto-orientation au contact de la carcasse par pivotement autour d'un axe vertical.

Les couteaux étant en position basse au cours du pivotement de la table, il est procédé après détection de la présence d'une volaille, au déplacement vertical des couteaux 36 qui pratiquent deux fentes dans la volaille, disposées de part et d'autre de l'ischium. Au cours de ce mouvement, les couteaux s'orientent automatiquement par un mouvement de pivotement autour d'un axe vertical, au contact de guides profilés 37.

Le poste VII vise à réaliser l'arrachement des coracoïdes et des omoplates, et le décollement des ailes et des parties avant des filets. Ce poste est constitué, par exemple, par le dispositif décrit dans le brevet français 89 00569 au nom de la Demanderesse. Ceci permet de poursuivre la coupe des filets aux postes VIII et X, le poste IX étant un poste libre, tout en pouvant suivre parfaitement le profil de la carcasse, ce qui évite de laisser de la viande sur celle-ci. Les postes VIII et X réalisant la fin de la coupe des filets gauche et droit, complètent le travail de coupe commencé aux postes IV et V, ceux-ci pouvant par exemple être identiques aux postes VIII et X, mais avec des réglages différents (brevet français 89 00571 au nom de la Demanderesse).

Le poste XI représenté aux figures 7 et 8 vise à réaliser, à partir de l'arrière de la volaille, une coupe de part et d'autre de l'ischium, complétant le décollement de la chair des cuisses.

Ce poste comprend un bâti 38 sur lequel est monté déplaçable sur des colonnes 39 un chariot 40, à l'aide d'un vérin non représenté au dessin. Le poste est situé à l'extérieur de la trajectoire des extrémités des bras 4, et la direction de déplacement du chariot est radiale à la table centrale 3. Le chariot 40 est équipé de deux lames 41, disposées de façon symétrique par rapport au plan médian longitudinal du chariot, profilées longitudinalement depuis leur extrémité avant tournée du côté de la table 3 vers leur extrémité arrière, et incurvées latéralement pour former deux demi-coquilles maintenues rapprochées par un ressort 41a ou similaire, pour épouser au mieux la carcasse. Lorsqu'une volaille immobilisée sur son outil de contention se trouve à ce poste, il est procédé à un mouvement de déplacement vers l'intérieur du chariot 40, mouvement au cours duquel les lames 41 assurent la formation de fentes permettant le décollement de la chair de chaque cuisse vis-à-vis de la carcasse.

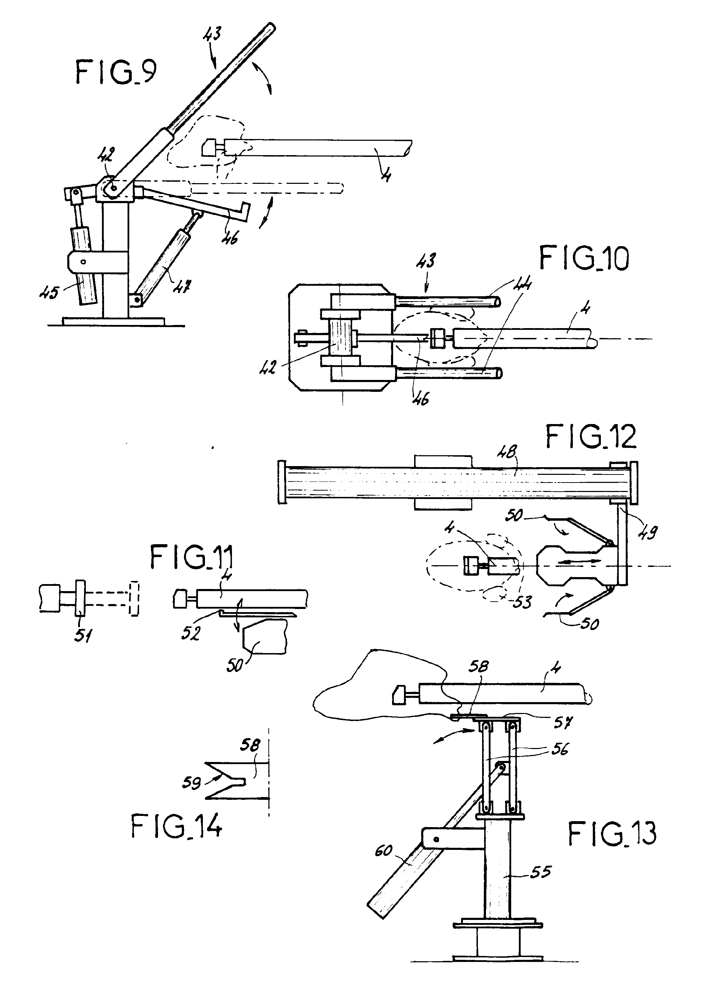

Le poste XII représenté aux figures 9 et 10 permet de réaliser la luxation des deux cuisses de la volaille. A cet effet, ce poste comprend une colonne fixe verticale à l'extrémité supérieure de laquelle est montée pivotante autour d'un axe 42, horizontal et perpendiculaire à l'axe d'un bras support de volaille disposé à ce poste, une fourche 43 dont les deux branches parallèles 44 sont susceptibles de venir prendre appui en partie haute des deux cuisses, au cours du mouvement de pivotement. Ce mouvement de pivotement est obtenu par l'intermédiaire d'un vérin 45. Ce poste comprend également un support dorsal 46 pour la volaille, actionné par un vérin 47.

Après détection de la présence d'une volaille à ce poste, il est procédé à la mise en appui du support 46 contre le dos de la volaille, puis au basculement de la fourche 43 vers le bas, dont les branches 44 réalisent la luxation des cuisses. La fourche 43 est ensuite actionnée en pivotement vers le haut et le support 46 escamoté vers le bas.

Le poste XIII représenté aux figures 11 et 12 permet de réaliser l'arrachement du paletot constitué par l'ensemble des cuisses, des filets et des ailes. Ce poste comprend un rail horizontal 48 situé en dessous du plan de déplacement des bras 4, sur lequel est monté déplaçable radialement à la table 3, un chariot 49. Ce chariot 49 comporte deux pinces 50 dont les ouvertures respectives sont tournées vers l'extérieur, chaque pince étant délimitée par une branche centrale fixe et une branche extérieure pivotante. Ces deux pinces 50 sont conformées pour pouvoir venir enserrer les deux cuisses d'une volaille se trouvant à ce poste. Ce poste comprend également une butée 52, montée pivotante autour d'un axe horizontal, et destinée à venir prendre appui derrière le pygostyle de la volaille, ainsi qu'une butée avant 51 déplaçable axialement au bras 4 portant la volaille.

En pratique, après détection de la présence d'une volaille, il est procédé au blocage de celle-ci par la butée 51 et par la butée pivotante 52, au déplacement du chariot 49 jusqu'à ce que les pinces 50 soient engagées sur les deux cuisses 53 de la volaille, à la fermeture des pinces sur les cuisses 53, à la poursuite de l'avance du chariot 49 avec arrachement du paletot, à l'ouverture des pinces, puis au retour du chariot en position de départ et au déblocage de la carcasse par escamotage de la butée 52. Le paletot tombe sur un tapis transporteur permettant son évacuation pour son traitement en boucherie.

Le poste XIV est un poste libre.

Le poste XV représenté schématiquement aux figures 13 et 14 permet l'arrachement du pygostyle. Ce poste comprend un bâti 55 sur lequel sont articulés, autour d'axes horizontaux et transversaux à l'axe du bras support de volaille immobilisé à ce poste, deux tiges parallèles 56 de longueur correspondant à la distance entre l'axe d'articulation et le pygostyle d'une volaille située à ce poste.

Les extrémités libres des tiges 56 sont reliées par une biellette 57, délimitant avec ces dernières et la partie supérieure du bâti 55, un parallélogramme déformable. La biellette 57 porte une lame 58, représentée en vue de dessus à la figure 14, présentant une ouverture en V 59.

Les moyens de commande de ce poste sont tels qu'après détection de la présence d'une volaille, les tiges étant inclinées vers l'intérieur, il est procédé par actionnement d'un vérin 60 à leur basculement vers l'extérieur, mouvement au cours duquel la lame en V s'engage sur le pygostyle et sépare celui-ci de la carcasse. Les tiges 56 sont ensuite rebasculées en position de départ.

Le poste XVI est un poste de déchargement de la carcasse, qui se trouve situé immédiatement en amont du poste suivant. Ce déchargement est réalisé automatiquement par rentrée du piston et des biellettes de l'outil de contention, suivie de plusieurs actionnements successifs du piston, un volet recouvrant la partie supérieure du piston favorisant l'éjection de la carcasse en empêchant que celle-ci demeure accrochée sur le piston.

Comme il ressort de ce qui précède, ce procédé et le dispositif pour sa mise en oeuvre sont particulièrement avantageux pour la découpe de volailles, telles que des dindes, en permettant de désolidariser le maximum de viande de la partie osseuse de la carcasse. En outre le dispositif pour la mise en oeuvre de ce procédé est susceptible de cadences élevées puisque de nombreuses opérations sont effectuées en temps masqué, sans aucune intervention manuelle, excepté le chargement des volailles. Les différents postes sont susceptibles d'une latitude de réglage pour permettre leur adaptation à différentes catégories de tailles de volailles.

Comme il va de soi, l'invention ne se limite pas au seul mode de mise en oeuvre de ce procédé, ni aux seuls postes du dispositif décrits ci-dessus à titre d'exemples ; elle en embrasse, au contraire, toutes les variantes. C'est ainsi notamment que :

– certaines des phases de ce procédé pourraient être inversées ;

– les postes IV et V pourraient réaliser la totalité de la coupe des filets droit et gauche ;

– les postes IV et V conservant leurs fonctions telles que définies dans la description précédente, le poste XI pourrait être utilisé de façon à supprimer les postes VIII et X ;

– les fonctions des postes VIII et X pourraient être assurées par d'autres mécanismes que ceux décrits ci-dessus à titre d'exemple ;

– dans le cas où le cou aurait été coupé préalablement au chargement des dindes sur la machine :

. si la coupe a été réalisée à l'endroit décrit ci-dessus, le procédé peut fonctionner sans le poste II ;

. sinon, ce poste est utilisable tel quel, en le faisant fonctionner pour couper la partie restante du cou à l'endroit décrit ci-dessus de façon à sectionner en même temps les tendons ;

– la coupe des corocoïdes pourrait être assurée, non par une scie horizontale telle que décrite dans la forme d'exécution ci-dessus, mais par deux scies verticales agissant de part et d'autre du sternum, au niveau de l'articulation des corocoïdes avec celui-ci ;

– le procédé et le dispositif peuvent être mis en oeuvre aussi bien à froid, à tiède ou à chaud.

**Revendications**

1. Procédé de découpe de volailles, caractérisé en ce qu'il consiste à réaliser :

– la découpe des filets, afin de les séparer de la carcasse,

– le décollement des ailes,

– la luxation des cuisses,

– et l'arrachement vis-à-vis de la carcasse d'un paletot constitué par les cuisses, les filets et les ailes.

2. Procédé selon la revendication 1, caractérisé en ce qu'il consiste à réaliser :

– la découpe à partir du sternum des deux filets sur une partie de la hauteur de ceux-ci, afin de les séparer de la carcasse,

– la coupe des coracoïdes,

– l'arrachement des coracoïdes ainsi que le décollement des ailes et des parties de filets déjà découpées,

– la fin de découpe des filets pour les séparer de la carcasse,

– la luxation des deux cuisses,

– l'arrachement vis-à-vis de la carcasse d'un paletot constitué par les cuisses, les filets et les ailes,

– et l'arrachement du pygostyle.

3. Procédé selon la revendication 1, caractérisé en ce qu'il consiste tout d'abord à réaliser la fixation de la carcasse par l'intérieur de celle-ci sur un dispositif de contention, sur lequel la carcasse demeure pendant tout le processus de découpe, et dont elle est éjectée en fin de cycle.

4. Procédé selon la revendication 3, caractérisé en ce qu'il consiste, après fixation de la volaille sur le dispositif de contention, à réaliser la coupe du cou de celle-ci à sa base, ainsi que des tendons.

5. Procédé selon l'une quelconque des revendications 1 à 4, caractérisé en ce qu'il consiste à réaliser, avant la première découpe de filets, une double incision de la peau le long du sternum de part et d'autre de celui-ci.

6. Procédé selon l'une quelconque des revendications 1 à 5, caractérisé en ce qu'il consiste à réaliser une incision de la peau le long de la colonne vertébrale.

7. Procédé selon l'une quelconque des revendications 1 à 6, caractérisé en ce qu'il consiste à réaliser, après la coupe des coracoïdes, de chaque côté de l'ischium une fente verticale puis, une seconde fente horizontale depuis l'arrière amorçant le décollement de la chair des cuisses.

8. Dispositif pour la mise en oeuvre du procédé selon l'une des revendications 1 à 7, caractérisé en ce qu'il comprend d'une part une colonne verticale (2), sur laquelle est montée pivotante une table (3), l'entraînement en rotation de cette dernière étant réalisé par l'intermédiaire d'un moteur auquel est associé un mécanisme d'indexage assurant un pivotement par pas de la table selon un angle de valeur déterminée, la table étant équipée de bras radiaux (4) avec formation entre deux bras voisins d'un angle égal à l'angle correspondant au pas du pivotement de la table, chaque bras étant équipé, à son extrémité libre, d'un dispositif (5) de contention par l'intérieur d'une carcasse de volaille, et d'autre part un certain nombre de postes de travail (I - XVI) destinés chacun à la mise en oeuvre d'une phase de l'opération de découpe, disposés selon un cercle de même axe que celui de la colonne verticale, à proximité des extrémités des bras (4) supports de volailles, et montés sensiblement selon la même répartition angulaire que lesdits bras, des moyens étant prévus pour commander la mise en service de chaque poste après positionnement en face de lui d'une carcasse de volaille.

9. Dispositif selon la revendication 8, caractérisé en ce que les moyens d'incision de la peau le long du sternum et de la colonne vertébrale sont réalisés à un poste (III) comprenant un chariot (9) déplaçable radialement par rapport à la table, portant une colonne (12) à l'extrémité supérieure de laquelle sont montés, superposés et articulés autour d'axes horizontaux et perpendiculaires à la direction de déplacement du chariot, deux bras (13,14) reliés l'un à l'autre par l'intermédiaire d'un vérin (15) les actionnant dans un sens de rapprochement ou d'écartement à la façon d'un compas, chaque bras étant équipé, à son extrémité libre, d'une scie circulaire (16) simple ou double, les moyens de commande étant tels que, partant d'une position dans laquelle le chariot est reculé, il est procédé successivement à la détection de présence d'une volaille sur son support, à l'avance du chariot, à la mise en contact avec la volaille d'une butée (17) montée sur la colonne, à la mise en rotation des scies (16), à la fermeture des bras pour amener les scies au contact de la peau, au déplacement en sens inverse du chariot (9) avec incision de la peau, à l'arrêt de la rotation des scies (16), à l'ouverture des bras.

10. Dispositif selon la revendication 8, caractérisé en ce que les moyens de coupe des coracoïdes sont constitués par un poste de travail (VI) comprenant un chariot (20) déplaçable radialement par rapport à la table (3), dont l'extrémité située du côté de celle-ci est équipée d'une scie circulaire (23) montée sur un axe perpendiculaire à l'axe de déplacement du chariot, une butée (25) limitant le déplacement du chariot vers la volaille, et un support (27) qui, destiné à venir prendre appui contre le dos de la carcasse tournée vers le bas, est déplaçable selon une direction sensiblement verticale, les moyens de commande étant tels qu'il est procédé successivement à la détection de présence d'une volaille, à l'amenée du support dorsal (27) au contact de celle-ci, à l'avance du chariot (20) avec mise en fonctionnement de la scie (23), à la découpe des coracoïdes (29) jusqu'à mise en appui de la butée (25) contre la volaille, qui commande le retour du chariot, l'arrêt de la scie, et le retour en position basse du support dorsal.

11. Dispositif selon la revendication 8, caractérisé en ce que les moyens de réalisation, de chaque côté de l'ischium, d'une fente amorçant le décollement de la chair de la cuisse sont constitués par un poste de travail comprenant un dispositif (32) mobile verticalement, disposé en-dessous du plan de déplacement des volailles par les bras (4), équipé de deux couteaux (36) sensiblement parallèles et d'orientation verticale destinés à pratiquer deux fentes verticales dans la volaille, de part et d'autre de l'ischium.

12. Dispositif selon la revendication 11, caractérisé en ce que les couteaux (36) sont auto-orientables, c'est-à-dire montés pivotants verticalement au contact de guides profilés (37).

13. Dispositif selon l'une quelconque des revendications 11 et 12, caractérisé en ce que les moyens complétant le décollement des cuisses sont constitués par deux lames (41) montées sur un support (40) déplaçable radialement par rapport à la table pivotante, disposées de façon symétrique par rapport au plan médian longitudinal du support, profilées longitudinalement depuis leur extrémité avant tournée du côté de la table, vers leur extrémité arrière, et incurvées latéralement pour former deux demi-coquilles.

14. Dispositif selon la revendication 8, caractérisé en ce que les moyens de luxation des deux cuisses sont constitués par un poste de travail (XII) comprenant une colonne à l'extrémité supérieure de laquelle est montée, pivotante autour d'un axe horizontal et perpendiculaire à l'axe d'un bras support de volaille, immobilisé en regard de ce poste, et actionnable à l'aide d'un vérin (45), une fourche (43) dont les deux branches parallèles (44) sont susceptibles de venir prendre appui en partie haute des deux cuisses, et un support dorsal (46) déplaçable de bas en haut par un vérin (47), les moyens de commande étant tels qu'il est procédé successivement à la détection de la présence d'une volaille, à la mise en appui du support dorsal contre la volaille, au basculement de la fourche vers le bas puis vers le haut, et au retour en position basse du support dorsal.

15. Dispositif selon la revendication 8, caractérisé en ce que les moyens d'arrachement du paletot sont constitués par un poste de travail (XIII) comprenant un support sur lequel sont montées sur un chariot (49) déplaçable horizontalement et radialement, deux pinces (50) disposées en-dessous du plan des bras supports de volailles et dont les ouvertures sont tournées vers l'extérieur et sont susceptibles d'enserrer chacune une cuisse (53), les moyens de commande étant tels qu'il est procédé successivement à la détection de présence d'une volaille au poste, au déplacement des pinces en direction des cuisses, au serrage des pinces sur les cuisses, à la poursuite de l'avance du chariot avec arrachement des cuisses, à l'ouverture des pinces puis au retour du chariot en position de départ.

16. Dispositif selon la revendication 15, caractérisé en ce qu'il comprend d'une part une butée (52) venant prendre appui contre le pygostyle, destinée à assurer un blocage axial de la carcasse lors de l'arrachement du paletot, et d'autre part une butée (51) venant prendre appui contre la section de la colonne vertébrale à l'endroit où le cou a été coupé.

17. Dispositif selon la revendication 8, caractérisé en ce que les moyens de séparation du pygostyle sont constitués par un poste (XV) comprenant un bâti (55) sur lequel sont articulées autour d'axes horizontaux et transversaux à l'axe du bras support de volaille immobilisé à ce poste, deux tiges (56) parallèles, de longueur correspondant à la distance entre les axes et le pygostyle d'une volaille située à ce poste, dont les extrémités libres sont reliées par une bielle (57) portant une lame (58) comportant une ouverture en V (59), une tige étant actionnable en rotation par action d'un vérin (60), les moyens de commande étant tels qu'après détection de la présence d'une volaille, les tiges étant inclinées vers l'intérieur, il est procédé au basculement de celles-ci vers l'extérieur, mouvement au cours duquel la lame en V s'engage sur le pygostyle et sépare celui-ci de la carcasse, avant retour des tiges en position de départ.

**Patentansprüche**

1. Verfahren zum Zerteilen von Geflügel, gekennzeichnet durch die folgenden Schritte:
   – Abschneiden der Filets, nachdem diese vom Rumpf getrennt worden sind,
   – Ablösen der Flügel,
   – Ausrenken der Schenkel,
   – Abreißen eines Mantels, welcher aus den Schenkeln, den Filets und den Flügeln gebildet ist, vom Rumpf.

2. Verfahren nach Anspruch 1, dadurch gekennzeichnet, daß es folgende Schritte umfaßt:
   – Abschneiden der beiden Filets vom Brustbein her über einen Bereich der Höhe derselben, nachdem diese vom Rumpf getrennt worden sind,
   – Schneiden der Rabenschnabelfortsätze,
   – Abreißen der Rabenschnabelfortsätze sowie Ablösen der Flügel und der Teile der bereits abgeschnittenen Filets,
   – Beendigen des Abschneidens der Filets, um sie von dem Rumpf zu trennen,

   – Ausrenken der beiden Schenkel,
   – Abreißen eines Mantels, welcher aus den Schenkeln, den Filets und den Flügeln besteht, vom Rumpf,
   – und Abreißen des Pygostyls.

3. Verfahren nach Anspruch 1, dadurch gekennzeichnet, daß es den Schritt umfaßt, zuerst den Rumpf von innen her auf einer Halteeinrichtung zu befestigen, auf der der Rumpf während des ganzen Zerteilvorganges verbleibt und von der er am Ende des Zyklus ausgestoßen wird.

4. Verfahren nach Anspruch 3, dadurch gekennzeichnet, daß es nach Befestigung des Vogels auf der Halteeinrichtung den Schritt umfaßt, dessen Hals an seiner Basis sowie die Sehnen abzuschneiden.

5. Verfahren nach einem der Ansprüche 1 bis 4, dadurch gekennzeichnet, daß es den Schritt umfaßt, vor dem ersten Abschneiden der Filets einen doppelten Hautschnitt entlang dem Brustbein zu beiden Seiten desselben auszuführen.

6. Verfahren nach einem der Ansprüche 1 bis 5, dadurch gekennzeichnet, daß es den Schritt umfaßt, einen Hautschnitt entlang der Wirbelsäule auszuführen.

7. Verfahren nach einem der Ansprüche 1 bis 6, dadurch gekennzeichnet, daß es den Schritt umfaßt, nach dem Schneiden der Rabenschnabelfortsätze zu jeder Seite des Sitzbeins eine vertikale Schnittöffnung und sodann eine zweite horizontale Schnittöffnung von hinten her auszuführen und so das Ablösen des Fleisches der Schenkel in die Wege zu leiten.

8. Einrichtung zum Durchführen des Verfahrens nach einem der Ansprüche 1 bis 7, dadurch gekennzeichnet, daß sie einerseits eine vertikale Säule (2) umfaßt, auf welcher ein Tisch (3) drehbar gelagert ist, wobei der Drehantrieb des letzteren durch einen Motor bewerkstelligt wird, welchem ein Indexiermeachanismus für eine schrittweise Drehung des Tisches jeweils um einen Winkel vorgegebener Größe zugeordnet ist, wobei ferner der Tisch mit radialen Armen (4) ausgestattet ist, mit einem Winkel zwischen zwei benachbarten Armen gleich dem Winkel, welcher dem Drehschritt des Tisches entspricht, wobei ferner jeder Arm an seinem freien Ende mit einer Halteeinrichtung (5) zum Halten eines Geflügelrumpfes von innen her ausgestattet ist, und daß sie andererseits eine bestimmte Anzahl von Arbeitsstationen (I bis XVI) umfaßt, die jeweils zur Durchführung einer Phase des Zerteilvorganges vorgesehen und auf einem Kreis mit derselben Achse wie der der vertikalen Säule in der Nähe der Enden der die Geflügel haltenden Arme (4) angeordnet sind, wobei diese Stationen im wesentlichen mit dem gleichen Winkelabstand montiert sind wie die Arme, und wobei Mittel vorgesehen sind, um die Stationen jeweils in Betrieb zu setzen, nachdem ihnen gegenüber ein Geflügelrumpf positioniert wurde.

9. Einrichtung nach Anspruch 8, dadurch gekennzeichnet, daß die Mittel zum Ausführen des Hautschnittes entlang dem Brustbein und entlang der Wirbelsäule an einer Station (III) vorgesehen sind, die einen bezüglich des Tisches radial verfahrbaren Wagen (9) aufweist, welcher eine Säule (12) trägt, an deren oberem Ende zwei übereinanderliegende und um horizontale sowie rechtwinklig zur Verfahrrichtung des Wagens liegende Achsen schwenkbare Arme (13, 14) gelagert sind, die miteinander über einen Betätigungszylinder (15) verbunden sind, der diese in der Art eines Zirkels im Sinne einer gegenseitigen Annäherung oder Entfernung betätigt, wobei jeder Arm an seinem freien Ende mit einer einfachen oder doppelten Kreissäge (16) ausgestattet ist, und wobei die Steuermittel so ausgelegt sind, daß von einer zurückgezogenen Position des Wagens ausgehend nacheinander folgende Schritte ablaufen: Feststellen des Vorhandenseins eines Geflügels auf seinem Träger, Zustellen des Wagens, in Kontakt bringen eines an der Säule montierten Anschlages (17) mit dem Geflügel, in Drehung versetzen der Sägen (16), Schließen der Arme, um die Sägen in Kontakt mit der Haut zu bringen, Verfahren des Wagens (9) in der anderen Richtung mit gleichzeitigem Schneiden der Haut, Anhalten der Drehung der Sägen (16), Öffnen der Arme.

10. Einrichtung nach Anspruch 8, dadurch gekennzeichnet, daß die Mittel zum Schneiden der Rabenschnabelfortsätze von einer Arbeitsstation (VI) gebildet werden, welche einen gegenüber dem Tisch (3) radial verfahrbaren Wagen (20) aufweist, dessen diesem zugewandtes Ende mit einer auf einer rechtwinklig zur Verfahrachse des Wagens stehenden Achse gelagerten Kreissäge (23) ausgestattet ist, ferner einen den Verfahrweg des Wagens zum Geflügel hin begrenzenden Anschlag (25) und eine Stütze (27), die dazu bestimmt ist, an dem nach unten gekehrten Rücken des Rumpfes angelegt zu werden und die in einer im wesentlichen vertikalen Richtung verstellbar ist, wobei die Steuermittel so ausgelegt sind, daß nacheinander folgende Schritte ablaufen: Feststellen des Vorhandenseins eines Geflügels , in Kontakt bringen der Rückenstütze (27) mit dem Geflügel, Verfahren des Wagens (20) in Vorwärtsrichtung bei gleichzeitigem Inbetriebsetzen der Säge (23), Schneiden der Rabenschnabelfortsätze (29) bis zur Anlage des Anschlages (25) am Geflügel, wodurch die Rückwärtsbewegung des Wagens gestartet wird, Anhalten der Säge und Zurückstellen der Rückenstütze in die abgesenkte Position.

11. Einrichtung nach Anspruch 8, dadurch gekennzeichnet, daß die Mittel zum Ausführen einer Schnittöffnung an den beiden Seiten des Sitzbeins, welche das Ablösen des Fleisches des Schenkels in die Wege leiten, durch eine Arbeitsstation mit einer vertikal beweglichen Einrichtung (32) gebildet sind, die unterhalb der Ebene der Bewegung des Geflügels durch die Arme (4) angeordnet ist und die mit zwei im wesentlichen parallelen und vertikal ausgerichteten Messern (36) ausgestattet ist, welche dazu dienen, zwei vertikale Schnittöffnungen beiderseits des Sitzbeins an dem Geflügel anzubringen.

12. Einrichtung nach Anspruch 11, dadurch gekennzeichnet, daß die Messer (36) selbstausrichtbar sind, d.h. vertikal schwenkend in Anlage mit profilierten Führungen (37).

13. Einrichtung nach einem der Ansprüche 11 und 12, dadurch gekennzeichnet, daß die Mittel zum Vollenden des Ablösens der Schenkel durch zwei Blätter (41) gebildet sind, die an einem gegenüber dem drehbaren Tisch radial verstellbaren Träger (40) montiert sind, die ferner symmetrisch zur Längsmittelebene des Trägers angeordnet sind und die in Längsrichtung von ihrem dem Tisch (3) zugewandten Vorderende zu ihrem Hinterende hin profiliert und seitlich gekrümmt sind, so daß sie zwei Halbschalen bilden.

14. Einrichtung nach Anspruch 8, dadurch gekennzeichnet, daß die Mittel zum Ausrenken der beiden Schenkel durch eine Arbeitsstation (XII) gebildet sind, welche eine Säule umfaßt, an deren oberem Ende eine Gabel (43) montiert ist, die um eine horizontale und rechtwinklig zur Achse eines gegenüber der Station feststehenden Tragarmes für das Geflügel liegende Achse schwenkbar ist und die mittels eines Stellzylinders (45) betätigbar ist, wobei die beiden parallelen Arme (44) der Gabel dazu ausgelegt sind, sich an den oberen Bereich der beiden Schenkel anzulegen, sowie eine Rückenstütze (46), die mittels eines Stellzylinders (47) von unten nach oben verstellbar ist, wobei die Steuermittel so ausgelegt sind, daß nacheinander folgende Schritte ablaufen: Feststellen des Vorhandenseins eines Geflügels, Bringen der Rückenstütze zur Anlage am Geflügel, Verschwenken der Gabel nach unten und wieder nach oben, und Zurückverstellen der Rückenstütze in die abgesenkte Position.

15. Einrichtung nach Anspruch 8, dadurch gekennzeichnet, daß die Mittel zum Abreißen des Mantels von einer Arbeitsstation (XIII) gebildet sind, die einen Träger umfaßt, auf welchem auf einem horizontal und radial verfahrbaren Wagen (49) zwei Zangen (50) angeordnet sind, welche sich unterhalb der Ebene der Haltearme für das Geflügel befinden, deren Öffnungen nach außen gerichtet und die jeweils zum Klemmen eines Schenkels (53) ausgebildet sind, wobei die Steuermittel so ausgelegt sind, daß folgende Schritte ablaufen: Feststellen des Vorhandenseins eines Geflügels in der Station, Verstellen der Zangen in Richtung der Schenkel, Andrücken der Zangen an die Schenkel, Zustellen des Wagens bei gleichzeitigem Abreißen der Schenkel, Öffnen der Zangen und Zurückverfahren des Wagens in die Ausgangsstellung.

16. Einrichtung nach Anspruch 15, dadurch gekennzeichnet, daß sie einerseits einen Anschlag (52) umfaßt, welcher sich gegen das Pygostyl anlegt und dazu dient, eine axiale Fixierung des Rumpfes beim Abreißen des Mantels zu gewährleisten, und andererseits einen Anschlag (51), welcher sich gegen den Abschnitt der Wirbelsäule in dem Bereich anlegt, wo der Hals abgetrennt wurde.

17. Einrichtung nach Anspruch 8, dadurch gekennzeichnet, daß die Mittel zum Abtrennen des Pygostyls von einer Station (XV) gebildet sind, welche ein Grundgestell (55) umfaßt, auf welchem zwei parallele Stangen (56) um horizontale und quer zur Achse des Geflügeltragarmes, der in der Station unbeweglich ist, schwenkbar gelagert sind, wobei die Länge der Stangen dem Abstand zwischen den Achsen und dem Pygostyl eines in der Station befindlichen Geflügels entspricht und wobei deren freie Enden durch ein Koppelglied (57) verbunden sind, welches eine mit einer V-förmigen Öffnung (59) versehene Feder (58) trägt, wobei eine Stange durch einen Stellzylinder (60) verschwenkbar ist und wobei die Steuermittel so ausgelegt sind, daß nach Feststellen des Vorhandenseins eines Geflügels bei nach innen geneigten Stangen im nächsten Schritt diese in Richtung nach außen geschwenkt werden, bei welcher Bewegung die V-Feder am Pygostyl angreift und dieses vom Rumpf abreißt, bevor die Stangen in ihre Ausgangsposition zurückkehren.

**Claims**

1. Method of cutting-up poultry, characterised in that it consists of carrying out:
   – the cutting of the fillets, in order to separate them from the carcass,
   – the detaching of the wings,
   – the dislocation of the legs, and
   – the pulling away from the carcass of a jacket consisting of the legs, fillets and wings.

2. Method according to claim 1, characterised in that it consists of carrying out:
   – the cutting, starting from the sternum, of the two fillets over part of their height, in order to separate them from the carcass,
   – the cutting of the coracoids,
   – the pulling away of the coracoids and the separation of the wings and parts of fillets already cut,
   – the final cutting of the fillets in order to separate them from the carcass,
   – the dislocation of the two legs,
   – the pulling away from the carcass of a jacket consisting of the legs, fillets and wings, and
   – the pulling away of the pygostyle.

3. Method according to claim 1, characterised in that it consists first of all of fixing the carcass by its inside on a holding device, on which the carcass remains throughout the entire cutting-up process and from which it is ejected at the end of the cycle.

4. Method according to claim 3, characterised in that it consists, after fixing of the fowl on the holding device, of cutting its neck at its base, and the tendons.

5. Method according to any one of claims 1 to 4, characterised in that it consists of making, before the first cutting of the fillets, a double incision in the skin along the sternum, on each side of it.

6. Method according to any one of claims 1 to 5, characterised in that it consists of making an incision in the skin along the spinal column.

7. Method according to any one of claims 1 to 6, characterised in that it consists of making, after the cutting of the coracoids, a vertical slit on each side of the ischium and then a second, horizontal slit from the rear, starting off the separation of the flesh on the legs.

8. Device for implementing the method according to one of claims 1 to 7, characterised in that it comprises on the one hand a vertical pillar (2), on which a table (3) is mounted pivotingly, the driving of the latter in rotation being effected by means of a motor with which an indexing mechanism is associated, providing a pivoting of the table in steps according to an angle of a given value, the table being fitted with radial arms (4) with the formation, between two adjacent arms, of an angle equal to the angle corresponding to the pivoting step of the table, each arm being fitted, at its free end, with a device (5) for holding a poultry carcass by the inside, and on the other hand a certain number of working stations (I - XVI) each designed for the implementation of one stage of the cutting-up operation, disposed in a circle with the same axis as the vertical pillar, close to the ends of the poultry support arms (4), and mounted substantially in accordance with the same angular distribution as the said arms, means being provided for controlling the startup of each station after the positioning opposite it of a poultry carcass.

9. Device according to claim 8, characterised in that the means of making incisions in the skin along the sternum and spinal column are produced at a station (III) comprising a carriage (9) which is movable radially with respect to the table, carrying a pillar (12) at the top end of which are mounted, one above the other and articulated about horizontal axes perpendicular to the direction of movement of the carriage, two arms (13, 14) connected to each other by means of a jack (15) actuating them in a direction bringing them together or separating them like a pair of compasses, each arm being equipped, at its free end, with a single or double circular saw (16), the control means being such that successively, starting from a position in which the carriage is withdrawn, the presence of a fowl on its support is detected, the carriage is moved forwards, a stop (17) mounted on the pillar is brought into contact with the fowl, the saws (16) are rotated, the arms are closed to bring the saws into contact with the skin, the carriage (9) is moved in the opposite direction with incision of the skin, the rotation of the saws (16) is stopped and the arms are opened.

10. Device according to claim 8, characterised in that the means of cutting the coracoids consist of a work station (VI) comprising a carriage (20) movable radially with respect to the table (3) and whose end situated on the table side is equipped with a circular saw (23) mounted on a shaft at right angles to the axis of movement of the carriage, a stop (25) limiting the movement of the carriage towards the fowl and a support (27) which, designed to come to bear against the back of the carcass oriented downwards, is movable in a substantially vertical direction, the control means being such that successively the presence of a fowl is detected, the dorsal support (27) is brought into contact with the latter, the carriage (20) is moved forwards with the startup of the saw (23), the coracoids (29) are cut until the stop (25) is brought to bear against the fowl, which actuates the return of the carriage, the stopping of the saw and the return of the dorsal support to its lower position.

11. Device according to claim 8, characterised in that the means of making, on each side of the ischium, a slit starting off the separation of the flesh on the leg consist of a work station comprising a device (32) which is movable vertically, disposed below the plane of movement of the poultry by the arms (4), fitted with two substantially parallel knives (36) with a vertical orientation intended to make two vertical slits in the fowl, on each side of the ischium.

12. Device according to claim 11, characterised in that the knives (36) are self-orienting, ie mounted so as to pivot vertically upon contact with profiled guides (37).

13. Device according to either one of claims 11 and 12, characterised in that the means completing the separation of the flesh on each leg consist of two blades (41) mounted on a support (40) which is movable radially with respect to the pivoting table, disposed symmetrically with respect to the longitudinal mid-plane of the support, shaped longitudinally from their front end turned towards the table, towards their rear end, and curved laterally to form two half-shells.

14. Device according to claim 8, characterised in that the means of dislocating the two legs consist of a work station (XII) comprising a pillar, at the top end of which is mounted, so as to pivot about a horizontal axis perpendicular to the axis of a poultry support arm immobilised opposite this station, and actuatable by means of a jack (45), a fork (43) whose two parallel prongs (44) are able to come to bear at the top part of the two legs, and a dorsal support (46) which can be moved upwards by means of a jack (47), the control means being such that successively the presence of a fowl is detected, the dorsal support is brought to bear against the fowl, the fork is tilted downwards and then upwards and the dorsal support is returned to its lower position.

15. Device according to claim 8, characterised in that the means of pulling away the jacket consist of a work station (XIII) comprising a support on which are mounted, on a carriage (49) which is movable horizontally and radially, two grippers (50) disposed below the plane of the poultry support arms and whose openings are oriented outwards and are each able to grip a leg (53), the control means being such that successively the presence of a fowl at the station is detected, the grippers are moved in the direction of the legs, the grippers grip on the legs, the carriage continues to move forwards with the legs and the whole of the jacket or two half jackets being pulled away, the grippers are opened and then the carriage is returned to its initial position.

16. Device according to claim 15, characterised in that it comprises on the one hand a stop (52) which comes to bear against the pygostyle, designed to ensure axial locking of the carcass during the pulling away of the jacket, and on the other hand a stop (51) coming to bear against the section of the spinal column at the point where the neck has been cut.

17. Device according to claim 8, characterised in that the means of separating the pygostyle consist of a station (XV) comprising a frame (55) on which are articulated, about horizontal axes transverse to the axis of the arms supporting the poultry immobilised at this station, two parallel rods (56) with a length corresponding to the distance between the axes and the pygostyle of a fowl located at this station, the free ends of which are connected by a connecting rod (57) carrying a blade (58) having a V-shaped opening (59), one rod being actuatable in rotation by acting on a jack (60), the control means being such that after the presence of a fowl is detected, the rods being inclined towards the inside, they are tilted towards the outside, a movement during which the V-shaped blade engages on the pygostyle and separates it from the carcass, before the rods return to their initial position.

# FIG.1

# FIG.2

**FIG_3**

**FIG_5**

**FIG_6**

FIG_4

FIG_7

FIG_8

FIG.9

FIG.10

FIG.11

FIG.12

FIG.13

FIG.14